# FASCICULE DE BREVET EUROPEEN

(11) **EP 3 261 014 B1**
(45) Date de publication et mention de la délivrance du brevet: **11.09.2019**
(21) Numéro de dépôt: 17176679.3
(22) Date de dépôt: 19.06.2017
(51) Int. Cl.: G06F 21/77, G06Q 20/30

(54) **PROCÉDÉ D'ENVOI D'UNE INFORMATION DE SÉCURITÉ**
SENDEVERFAHREN EINER SICHERHEITSINFORMATION
METHOD FOR SENDING SECURITY INFORMATION

(30) Priorité: 20.06.2016 FR 1655732
(43) Date de publication de la demande: 27.12.2017
(73) Titulaire: IDEMIA France, 92700 Colombes (FR)
(72) Inventeur: CHAMBEROT, Francis, 92700 Colombes (FR); VAURES, Pierre, 92700 Colombes (FR)
(74) Mandataire: Cougard, Jean-Marie

(56) Documents cités:
- WO-A1-2016/097650
- US-A1- 2010 136 913
- US-A1- 2014 279 309
- CONSTANTINOS MARKANTONAKIS ED - BRUCE SCHNEIER ET AL: "Secure Log File Download Mechanisms for Smart Cards", 31 janvier 2006 (2006-01-31), SMART CARD. RESEARCH AND APPLICATIONS LECTURE NOTES IN COMPUTER SCIENCE;;LNCS, SPRINGER, BERLIN, DE, PAGE(S) 285 - 304, XP019048907, ISBN: 978-3-540-67923-3 * abrégé * * page 4 - page 17 * * figure 1 *

## Description

### Arrière-plan de l'invention

La présente invention se situe dans le domaine général des terminaux (ou lecteurs) configurés pour coopérer avec des dispositifs électroniques, tels que des cartes à puce par exemple, pour réaliser une transaction.

L'invention concerne en particulier la remontée d'informations utiles par de tels terminaux vers un serveur distant afin de réaliser un traitement approprié.

L'invention s'applique plus particulièrement, mais de manière non exclusive, aux terminaux (ou lecteurs) configurés pour traiter une transaction selon le protocole EMV (pour « *Europay Mastercard Visa* »), par exemple avec une carte à puce (ou cartes à microcircuit) conforme à la norme ISO7816.

De manière générale, une carte à puce est conçue pour communiquer avec un dispositif externe à cette carte, autrement appelé terminal ou lecteur. Ces cartes permettent d'effectuer divers types de transactions, telles que des transactions de paiement ou d'authentification du porteur, par exemple. Les cartes à puce pour applications bancaires (carte de crédit, carte de débit etc.), par exemple, sont aptes à communiquer avec des terminaux de paiement.

EMV est le protocole standardisé utilisé majoritairement dans le monde pour sécuriser notamment les transactions de paiement effectuées par des cartes à puce en coopération avec un terminal approprié.

Le protocole EMV a été conçu pour diminuer les risques de fraudes lors d'une transaction de paiement en permettant notamment l'authentification à la fois de la carte à puce et de son porteur. Ce processus d'authentification fait appel à une combinaison de cryptogrammes (ou clés cryptées) et de signatures numériques et nécessite éventuellement la saisie d'un code secret (appelé communément code PIN) par le porteur de la carte.

Suivant le type de carte utilisé, la situation, ou encore le montant considéré, une carte EMV peut fonctionner en ligne ou hors ligne. En mode en ligne, la carte EMV peut communiquer, via le lecteur, avec l'entité émettrice correspondante (la banque à l'origine de la carte, par exemple) afin de vérifier que la transaction en cours est légitime. En revanche, si la carte EMV fonctionne en mode hors ligne, celle-ci applique des critères de vérification préenregistrés pour décider si la transaction doit être autorisée ou refusée.

De nombreux mécanismes de sécurité ont récemment été développés afin de sécuriser autant que possible l'usage croissant des cartes à puce, de type EMV notamment.

Il a par exemple été développé des cartes à puce EMV aptes à détecter des attaques, de type optique ou autre, réalisées à leur encontre par des personnes ou entités malveillantes. Sur détection d'une telle attaque, la carte à puce efface les données sensibles qu'elle contient en mémoire et se rend volontairement inopérationnelle. Si un dialogue EMV est initié avec un lecteur, la carte répond à un message RESET (RST) par une réponse ATR (ANSWER TO RESET) modifiée indiquant que la transaction ne peut avoir lieu. Peu ou pas d'information est cependant inclus dans cette réponse ATR de sorte qu'il est difficile du côté lecteur de déterminer la cause de l'échec du dialogue.

Par ailleurs, les terminaux destinés à coopérer avec de telles cartes à puce sont eux aussi susceptibles de subir des attaques ou de rencontrer des disfonctionnements ou anomalies. Il n'existe pas aujourd'hui de mécanisme permettant de remonter efficacement des informations de sécurité propres au terminal et ce, jusqu'à un serveur distant (de l'émetteur de la carte par exemple) afin de permettre une meilleure évaluation et gestion des problèmes de sécurité ou autres évènements rencontrés par le terminal.

Les possibilités de suivi des comportements des terminaux de paiement, et plus généralement des transactions traitées par de tels terminaux, son aujourd'hui limitées et appellent à de nouveaux mécanismes de remonter d'information de sécurité depuis le terminal de paiement (ou lecteur) vers un tiers distant tel que l'émetteur de la carte à puce par exemple.

Il existe en particulier un besoin pour une solution permettant de remonter de telles informations sans modifier en profondeur les protocoles de communication actuels (de type EMV par exemple) mis en oeuvre par les lecteurs pour traiter une transaction.

Le document CONSTANTINOS MARKANTONAKIS ED (Bruce Schneier et al) intitulé « Secure Log File Download Mechanisms for Smart Cards » et datant du 1er janvier 2006 divulgue un mécanisme d'audit de cartes à puce impliquant le stockage de fichiers « log » dans une carte à puce et la transmission de ces fichiers vers l'extérieur.

### Objet et résumé de l'invention

A cet effet, la présente invention concerne un procédé d'envoi d'une information de sécurité mis en oeuvre par un terminal, le procédé comprenant les étapes suivantes :
- réception, lors d'une transaction en cours, d'une première donnée de transaction en provenance d'un dispositif électronique avec lequel ledit terminal coopère ;
- détection d'un évènement rencontré par le terminal lors de la transaction en cours ;
- génération d'un message de transaction comprenant un indicateur indiquant l'inclusion de la première donnée dans un champ du message ;
- insertion, dans le champ du message de transaction, d'une information de sécurité en remplacement de la première donnée de transaction, l'information de sécurité étant représentative dudit événement ; et
- envoi, à un serveur distant, du message de transaction comprenant l'information de sécurité.

Dans un exemple particulier, le dispositif électronique est une carte à puce, de type EMV par exemple.

L'invention propose un mécanisme permettant de remonter efficacement des informations de sécurité propres au terminal et ce, jusqu'à un serveur distant afin de permettre une meilleure évaluation et gestion des événements rencontrés par le terminal.

Cette information de sécurité peut ainsi être traitée de façon appropriée par le serveur distant, ou un dispositif tiers. A partir des informations de sécurité remontées depuis le terminal, un tiers (l'émetteur de la carte à puce par exemple) est capable de réaliser des contrôles de vérification et, le cas échéant, détecter une fraude ou anomalie rencontrée par le terminal lors d'une ou plusieurs transactions

L'invention offre un mécanisme souple et efficace pour remonter des informations de sécurité depuis un terminal bancaire vers un serveur bancaire afin de permettre à l'émetteur de la carte à puce (ou à un tiers) de détecter d'éventuelles anomalies de transaction, disfonctionnements ou attaques susceptibles d'être rencontrés par le terminal bancaire. Il est également possible de réaliser des analyses de risque et/ou de comportement à partir d'évènements détectés par le terminal bancaire.

L'invention est avantageuse en ce qu'il est possible de mettre en oeuvre la remontée d'information depuis le lecteur vers un serveur distant sans qu'il soit nécessaire de modifier le déroulement général d'un protocole de type EMV par exemple. Par conséquent, la mise en oeuvre de l'invention ne nécessite pas de modification importante des infrastructures bancaires.

Selon un mode de réalisation particulier, l'étape de détection comprend une analyse de données de transaction reçues, en provenance du dispositif électronique, durant la transaction en cours ; ledit évènement étant détecté à partir desdites données de transaction analysées.

Selon un mode de réalisation particulier, lors de l'analyse, le terminal détermine à partir des données de transaction et d'un historique de transaction du terminal si au moins une règle prédéfinie est satisfaite, ledit événement étant détecté si la règle prédéfinie est satisfaite.

Selon un mode de réalisation particulier, les données de transaction reçues comprennent un identifiant du dispositif électronique coopérant avec le serveur, l'historique de transaction pris en compte lors de l'analyse étant associé audit dispositif électronique.

Selon un mode de réalisation particulier, l'historique de transaction comprend la valeur courante d'un compteur, ladite analyse comprenant une comparaison de la valeur courante d'un compteur avec une valeur seuil.

Selon un mode de réalisation particulier, l'information de sécurité comprend la valeur courante dudit compteur.

Selon un mode de réalisation particulier, l'évènement détecté par le terminal comprend au moins l'un parmi :
- une anomalie dans la transaction en cours ;
- une anomalie dans une séquence de transactions comprenant la transaction en cours et au moins une transaction antérieure traitée par le terminal ; et
- une attaque à rencontre du terminal.

Selon un mode de réalisation particulier, la première donnée de transaction est l'une parmi les données de transaction définies par la norme EMV en tant que :
- liste CVM ;
- contrôle d'usage d'application ; et
- code d'action de l'émetteur.

Selon un mode de réalisation particulier, le procédé d'envoi comprend les étapes suivantes :
- détermination, sur détection dudit événement, de l'information de sécurité ; et
- enregistrement, dans une mémoire du terminal, de l'information de sécurité avant ladite insertion dans le message de transaction.

Selon un mode de réalisation particulier, lors de l'étape d'envoi, le message de transaction est envoyé pendant la transaction en cours. En variante, le message de transaction est envoyé après achèvement de la transaction en cours.

Selon un mode de réalisation particulier, la transaction en cours et la première donnée de transaction sont conformes au protocole EMV.

Dans un mode particulier de réalisation, les différentes étapes du procédé d'envoi sont déterminées par des instructions de programmes d'ordinateur.

En conséquence, l'invention vise aussi un programme d'ordinateur sur un support d'informations (ou d'enregistrement), ce programme étant susceptible d'être mis en oeuvre dans un terminal tel qu'un ordinateur, ce programme comportant des instructions adaptées à la mise en oeuvre des étapes d'un procédé d'envoi tel que défini ci-dessus.

L'invention vise aussi un support d'enregistrement (ou support d'informations) lisible par un ordinateur, et comportant des instructions d'un programme d'ordinateur tel que mentionné ci-dessus.

L'invention concerne également un procédé de traitement mise en oeuvre par un serveur, ledit procédé comprenant les étapes suivantes :
- réception, en provenance d'un terminal distant, d'un message de transaction comprenant un indicateur indiquant qu'une donnée de transaction conforme à un premier type de donnée est contenue dans un champ du message ;
- détermination de si l'indicateur est valide ;
- dans la négative, détection que ladite première donnée est une information de sécurité non conforme au premier type de donnée, ladite information de sécurité étant générée par le terminal sur détection d'un évènement rencontré lors d'une transaction ; et
- traitement de l'information de sécurité selon au moins une règle prédéfinie.

Selon un mode de réalisation particulier, le message de transaction reçue contient un identifiant du terminal distant, le serveur déterminant si l'indicateur est valide à partir de l'identifiant dudit terminal distant.

Dans un mode particulier de réalisation, les différentes étapes du procédé de traitement sont déterminées par des instructions de programmes d'ordinateur.

En conséquence, l'invention vise aussi un programme d'ordinateur sur un support d'informations (ou d'enregistrement), ce programme étant susceptible d'être mis en oeuvre dans un serveur, ou plus généralement dans un ordinateur, ce programme comportant des instructions adaptées à la mise en oeuvre des étapes d'un procédé de traitement tel que défini ci-dessus.

L'invention vise aussi un support d'enregistrement (ou support d'informations) lisible par un ordinateur, et comportant des instructions d'un programme d'ordinateur tel que mentionné ci-dessus.

A noter que les programme d'ordinateur mentionnés dans le présent exposé peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

De plus, les supports d'enregistrement (ou d'information) mentionnés dans le présent exposé peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

L'invention concerne également un terminal comprenant :
- un module de réception configuré pour recevoir, lors d'une transaction en cours, une première donnée transaction en provenance d'un dispositif électronique avec lequel ledit terminal coopère ;
- un module de détection configuré pour détecter un évènement rencontré par le terminal lors de la transaction en cours ;
- un module de génération configuré pour générer un message de transaction comprenant un indicateur indiquant l'inclusion de la première donnée de transaction dans un champ du message, et pour insérer, dans le champ du message de transaction, une information de sécurité en remplacement de la première donnée de transaction, l'information de sécurité étant représentative dudit évènement ; et
- un module d'envoi configuré pour envoyer, à un serveur distant, le message de transaction comprenant l'information de sécurité.

L'invention concerne également un serveur comprenant :
- un module de réception configuré pour recevoir, en provenance d'un terminal distant, un message de transaction comprenant un indicateur indiquant qu'une donnée de transaction conforme à un premier type de donnée est contenue dans un champ du message ;
- un module de détermination configuré pour déterminer si l'indicateur est valide ;
- un module de détection configuré pour détecter, si l'indicateur n'est pas valide, que ladite première donnée est une information de sécurité non conforme au premier type de donnée, ladite information de sécurité étant générée par le terminal sur détection d'un évènement rencontré lors d'une transaction ; et
- un module de traitement configuré pour traiter l'information de sécurité selon au moins une règle prédéfinie.

Les différents modes de réalisation et variantes définis ci-avant en référence au procédé d'envoi et au procédé de traitement s'appliquent de manière analogue au terminal et au serveur de l'invention, respectivement.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 représente, sous forme d'un diagramme, un exemple de coopération entre une carte à puce et un terminal externe conformément au protocole EMV ;
- la figure 2 représente, de manière schématique, un système comprenant un terminal, une carte à puce, et des serveurs distants, selon un mode de réalisation particulier de l'invention ;
- la figure 3 représente schématiquement la structure du terminal représenté en figure 2, selon un mode de réalisation particulier de l'invention ;
- la figure 4 représente schématiquement des modules mis en oeuvre par le terminal de la figure 3, selon un mode de réalisation particulier de l'invention ;
- la figure 5 représente schématiquement la structure d'un serveur représenté en figure 2, selon un mode de réalisation particulier de l'invention ;
- la figure 6 représente schématiquement des modules mis en oeuvre par le serveur de la figure 5 ;
- la figure 7 représente, sous forme d'un diagramme, un procédé d'envoi et un procédé de traitement conformément à un mode de réalisation particulier de l'invention ;
- la figure 8 représente, sous forme d'un diagramme, un procédé d'envoi et un procédé de traitement conformément à un mode de réalisation particulier de l'invention ; et
- la figure 9 représente schématiquement un message de transaction généré par le terminal illustré en figures 2-4, selon un mode de réalisation particulier de l'invention.

### Description détaillée de modes de réalisation

Comme indiqué ci-avant, la présente invention concerne les terminaux (ou lecteurs) configurés pour coopérer avec des dispositifs électroniques, tels que des cartes à puce par exemple, pour réaliser une transaction. L'invention porte en particulier sur la remontée d'informations de sécurité par de tels terminaux vers un serveur distant afin de réaliser un traitement approprié.

Dans le présent exposé, la présente invention est décrite dans le cadre d'un terminal (ou lecteur) coopérant avec une carte à puce selon le protocole EMV, ce terminal étant configuré pour remonter des informations de sécurité à un serveur distant lors d'une transaction EMV, ou ultérieurement. On comprendra toutefois que d'autres types de protocoles sont possibles pour mettre en oeuvre l'invention.

Dans le présent exposé, la notion de transaction est entendue au sens large et comprend par exemple, dans le domaine bancaire, aussi bien une transaction de paiement ou de transfert que d'une consultation d'un compte bancaire sur un terminal bancaire. L'invention est décrite ici dans le cadre d'un terminal de paiement configuré pour coopérer avec une carte de paiement (ou carte bancaire) afin de réaliser des transactions de paiement (ou transactions bancaires). On comprendra que d'autres types de transactions ou opérations sont envisageables dans le cadre de l'invention.

On notera également que, dans les exemples de réalisation qui suivent, la carte à puce, coopérant avec le terminal de paiement, est une carte conforme à la norme ISO 7816, d'autres types de dispositif électronique étant toutefois possibles pour traiter une transaction avec un lecteur. Cette carte à puce peut communiquer avec le terminal en mode avec contact ou en mode sans contact selon l'exemple considéré.

Sauf indication contraire, les éléments communs ou analogues à plusieurs figures portent les mêmes numéros de références et présentent des caractéristiques identiques ou analogues, de sorte que ces éléments communs ne sont généralement pas à nouveau décrits par souci de simplicité.

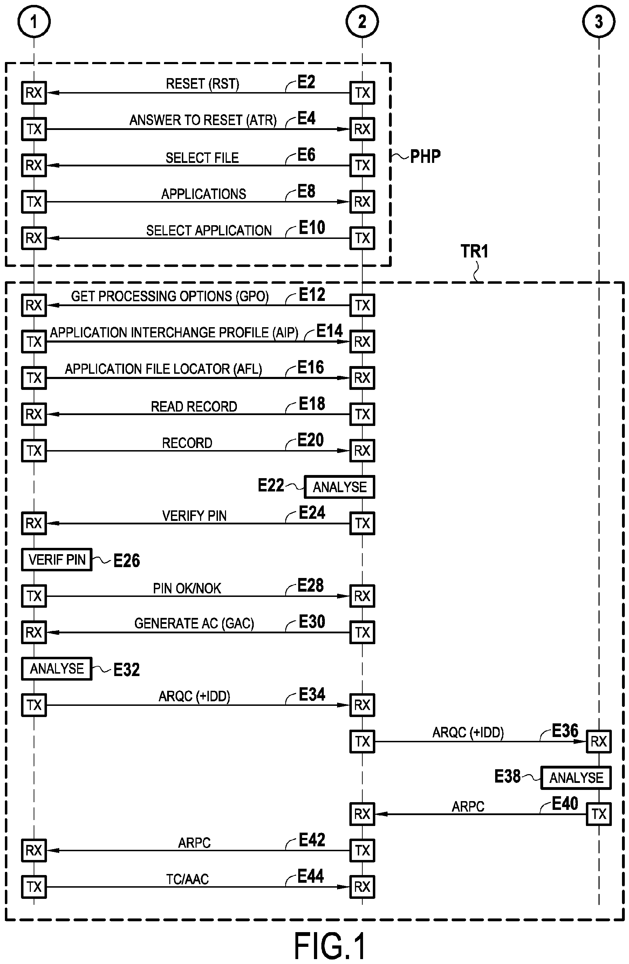

Afin de faciliter la compréhension de l'invention, on décrit à présent, en référence à la **figure 1****,** un exemple d'une transaction de paiement TR1 conforme au protocole EMV, cette transaction TR1 étant mise en oeuvre par un terminal 2 (ou lecteur) en coopération avec une carte à puce EMV 1 et avec un serveur bancaire 3 associé à l'émetteur de la carte 1. Certains aspects et détails du protocole EMV, et diverses variantes possibles, sont ici omis par souci de clarté, le protocole EMV étant bien connu de l'homme du métier.

Dans cet exemple, la carte à puce 1 est une carte de paiement et le lecteur 2 est un terminal de paiement.

On suppose ici que le porteur insert la carte à puce 1 dans le lecteur 2.

Le protocole EMV comprend une phase préliminaire PHP destinée à préparer la carte à puce 1 et le lecteur 2 à la mise en oeuvre de la transaction EMV (notée TR1) à suivre. Différents messages de transaction conformes au protocole EMV sont échangés entre la carte à puce 1, le lecteur 2 et (dans cet exemple) le serveur bancaire 3 au cours de la phase PHP puis au cours de la transaction TR1.

Plus précisément, lors de la phase préliminaire PHP, le lecteur 2 envoie (E2) un message RESET (RST) à la carte de paiement 1, cette dernière y répondant (E4) à l'aide d'un message ANSWER TO RESET (ATR).

Le lecteur 2 envoie (E6) ensuite à la carte 1 une commande SELECT FILE afin de demander à la carte de paiement 1 les applications que cette dernière est capable d'exécuter. En réponse, la carte 1 fournit (E8) au lecteur 2 une liste des différentes applications qu'elle peut mettre en oeuvre. Le porteur peut alors sélectionner via le lecteur 2 le mode de transaction souhaité, déclenchant ainsi l'envoi (E10) vers la carte 1 d'une commande SELECT APPLICATION.

Le lecteur 2 envoie (E10) en outre une commande GET PROCESSING OPTIONS (GPO) à la carte à puce 1 afin d'initier le début de la transaction TR1. L'envoi de cette commande GPO marque le début de la transaction EMV.

Au cours de cette transaction TR1, la carte de paiement 1 envoie (E14) au lecteur 2 une première série d'informations, indiquant notamment au lecteur 2 les différentes opérations à faire selon ses capacités pour mener à bien la transaction TR1. La carte 1 envoie (E16) également un message AFL (Application File Locator) qui indique la liste des données (fichiers et records) que le lecteur 2 doit aller lire dans la carte 1 pour pouvoir réaliser la transaction TR1. Le lecteur 2 lit (E18-E20) ainsi les informations spécifiées dans l'AFL. Pour ce faire, le lecteur 2 envoie (E18) une ou plusieurs commandes de lecture READ RECORD à la carte de paiement 1 et reçoit (E20) en retour les informations demandées (appelées RECORDS).

Les informations lues (E18-E20) par le lecteur 2 dans la carte 1 comprennent par exemple la date d'expiration de la carte à puce 1, le numéro de compte associé, une signature numérique (certificat) pour authentifier la carte 1...

Divers modes de réalisation sont envisageables. Dans cet exemple, le lecteur 2 réalise (E22) ensuite une étape d'analyse à partir des informations fournies (E20) par la carte de paiement 1. Si l'authentification associée à la carte de paiement 1 échoue, si une anomalie est détectée ou encore si un risque trop important est détecté, le lecteur 2 peut refuser la transaction. On suppose ici que l'analyse E22 est passée avec succès.

Le protocole EMV se poursuit ici avec une phase d'authentification du porteur de la carte à puce 1 selon une méthode appropriée. Dans cet exemple, où le mode avec vérification de code est mis en oeuvre, le lecteur 2 envoie (E24) à la carte de paiement 1 une requête VERIFY de vérification d'un code PIN saisi par le porteur. La carte de paiement 1 vérifie (E26) si le code PIN saisi par le porteur est valide.

Si le code PIN saisi est bon, la carte de paiement 1 envoie (E28) un message d'acceptation du code PIN au terminal. Dans le cas contraire, la carte 1 envoie (E28) un message d'erreur du code PIN au terminal.

Une fois le porteur authentifié, le protocole EMV se poursuit avec une phase de vérification de la transaction. Plus précisément, le lecteur 2 génère puis envoie (E30) à la carte 1 une commande GAC (pour GENERATE AC) contenant différentes données (montant de la transaction, devise utilisée, etc.) demandées préalablement par la carte de paiement 1.

En réponse à la commande GAC, la carte 1 réalise (E32) une étape d'analyse comprenant un certain nombre de vérifications de critères. A l'issue de l'analyse E32, la carte de paiement 1 répond au lecteur 2 en envoyant (E34) un cryptogramme (ou certificat cryptographique) indiquant la décision de la carte 1. Dans cet exemple, la carte à puce 1 envoie (E34) un cryptogramme ARQC (pour « *Autorisation Request Cryptogram* ») indiquant que la carte 1 souhaite poursuivre la transaction en ligne avec le serveur bancaire 3 de l'émetteur de la carte.

Le lecteur 2 transmet (E36) ainsi le cryptogramme ARQC au serveur bancaire 3 au niveau duquel est réalisé (E38) une nouvelle analyse à partir des informations reçues. Cette analyse E38 peut comprendre diverses vérifications afin de s'assurer que la transaction TR1 est valide. Le lecteur 2 reçoit (E40) une réponse indiquant la décision de l'émetteur et un cryptogramme ARPC authentifiant cette décision. Le lecteur 2 transmet (E42) ce message ARPC à la carte de paiement 1 afin de lui indiquer la décision prise par l'émetteur.

Si la carte 1 accepte la transaction, celle-ci envoie (E44) en réponse un cryptogramme de type TC (transaction acceptée) au lecteur 2. Dans le cas contraire, la carte 1 envoie (E44) un cryptogramme de type AAC indiquant le refus de la transaction.

A noter qu'un serveur tiers (non représenté) d'un système d'acquisition (ou acquéreur) peut dans certains cas faire l'interface entre le terminal 2 et le serveur bancaire 3.

Les différents messages ci-dessus échangés selon le protocole EMV pendant la transaction TR1, entre la carte à puce 1 et le lecteur 2 d'une part, et entre le lecteur 2 et le serveur 3 d'autre part, constituent des exemples de messages de transaction conformes au protocole EMV.

Il convient de rappeler ici que le déroulement de la transaction EMV décrit ci-dessus en référence à la **figure 1** ne constitue qu'un exemple non limitatif. Le protocole EMV offre en effet de nombreuses alternatives. Il incombe aux intégrateurs de faire les choix nécessaires pour adapter l'exécution du protocole selon les besoins (méthode d'authentification du porteur, transaction en ligne ou hors ligne etc.).

L'invention propose un mécanisme permettant de remonter efficacement des informations de sécurité propres au terminal et ce, jusqu'à un serveur distant (de l'émetteur de la carte par exemple) afin de permettre une meilleure évaluation et gestion des événements rencontrés par le terminal.

Pour ce faire, l'invention prévoit un procédé d'envoi, mis en oeuvre par un terminal, le procédé comprenant les étapes suivantes :
- détection d'un événement lors d'une transaction (de type EMV par exemple) en cours de traitement en coopération avec un dispositif électronique (une carte à puce par exemple) ;
- génération d'une information de sécurité représentative de cet événement ; et
- envoi de l'information de sécurité à un serveur distant, l'information de sécurité étant par exemple envoyée dans un message de transaction généré par le terminal.

Cette information de sécurité peut ainsi être traitée de façon appropriée par le serveur distant, ou un dispositif tiers. A partir des informations de sécurité remontées depuis le terminal, un tiers (l'émetteur de la carte par exemple), est capable de réaliser des contrôles de vérification et, le cas échéant, détecter une fraude ou anomalie rencontrée par le terminal lors d'une ou plusieurs transactions.

Dans un mode de réalisation particulier, l'invention se propose de détourner l'usage qui est fait classiquement de certaines données de transaction EMV tout en respectant les contraintes imposées par EMV. Le standard EMV prévoit ainsi que certaines données de transaction transmises par la carte à puce au terminal peuvent, le cas échéant, être envoyées ensuite par le terminal à un serveur distant (le serveur bancaire de l'émetteur par exemple), un tel envoi n'étant toutefois pas obligatoire. L'envoi de ces données de transaction à un serveur bancaire distant ne présente en effet pas toujours un intérêt dans la mesure où le destinataire (l'émetteur de la carte par exemple) a parfois déjà connaissance des données de transaction en question. Ces données de transaction sont considérées comme étant optionnelles du point de vue du serveur distant.

Aussi, dans un mode de réalisation particulier, l'invention se propose d'adapter la manière dont ces données de transaction, optionnelles du point de vue du serveur distant, sont traitées par le terminal et par le serveur distant en question.

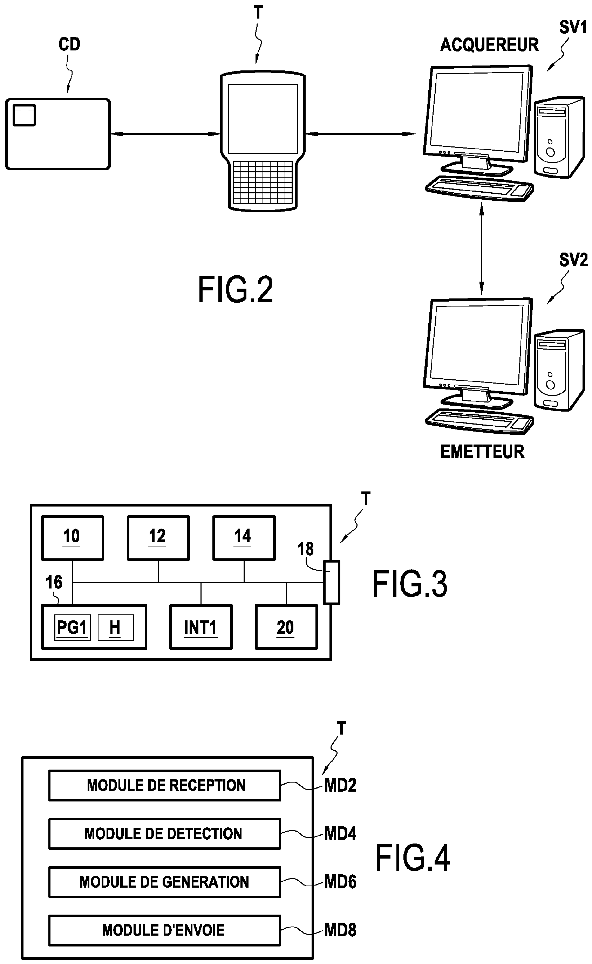

La **figure 2** représente schématiquement un terminal T (ou lecteur) configuré pour coopérer avec une carte à puce CD et avec un serveur distant SV2 pour traiter une transaction EMV, selon un mode de réalisation particulier. Dans cet exemple, un serveur distant SV1 effectue l'interface entre le terminal T et le serveur distant SV2. On suppose en outre ici que le serveur SV1 est contrôlé par un tiers acquéreur (ou « système d'acquisition ») et le serveur SV2 est contrôlé par l'émetteur (une banque) de la carte à puce CD.

La structure du terminal T et du serveur SV1, ainsi que la mise en oeuvre des procédés de l'invention par le terminal T et par le serveur SV1 sont décrits ci-après dans des modes de réalisation particuliers. On comprendra que certains éléments généralement présents dans un terminal (ou lecteur) et dans un serveur destinés à traiter des données de transaction ont été volontairement omis car ils ne sont pas nécessaires à la compréhension de la présente invention.

On comprendra en outre que le terminal T et le serveur distant SV1 représentés en **figure 1** ne constituent que des exemples non-limitatifs de réalisation, d'autres mises en oeuvre de l'invention étant possibles. L'homme du métier comprendra que certains éléments du terminal T et du serveur distant SV1 notamment ne sont décrits ici que pour faciliter la compréhension de l'invention, ces éléments n'étant pas nécessaires pour mettre en oeuvre l'invention.

La **figure 3** représente schématiquement la structure du terminal T illustré en **figure 2****,** selon un mode de réalisation particulier. Plus particulièrement, le terminal T comprend ici un processeur 10 couplé à une mémoire volatile réinscriptible 12 (de type RAM), une interface homme/machine 14, une mémoire non volatile réinscriptible 16 (de type Flash par exemple), une première interface de communication INT1, une deuxième interface de communication 18 et, éventuellement, un capteur 20.

L'interface homme/machine permet à un utilisateur d'interagir si besoin avec le terminal. Comme déjà indiqué, on suppose ici que le terminal T est un terminal de paiement. Alternativement, le terminal T est un distributeur automatique de billets (DAB) par exemple.

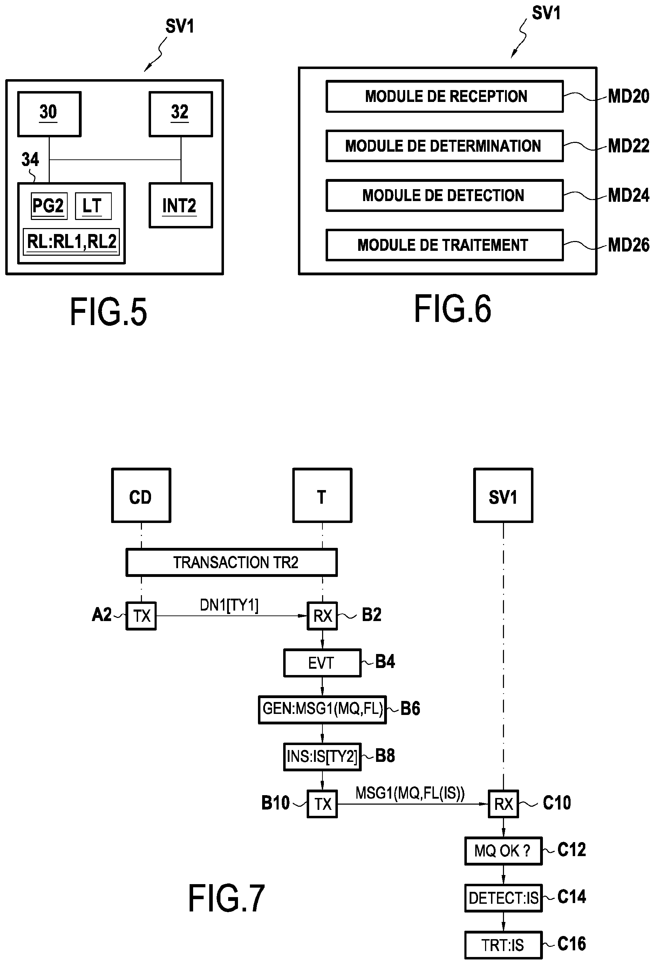

La mémoire 16 constitue ici un support d'enregistrement conforme à un mode de réalisation de l'invention, lisible par le terminal T, et sur lequel est enregistré un programme d'ordinateur PG1 conforme à un mode de réalisation de l'invention. Le programme PG1 comporte des instructions pour l'exécution des étapes d'un procédé d'envoi d'une information de sécurité IS pouvant le cas échéant être stockée dans la mémoire 16, conformément à un mode de réalisation de l'invention. Des exemples de réalisation de ce procédé d'envoi sont représentés sur les **figures 7** à **9** décrites ultérieurement.

La mémoire 16 est également configurée, le cas échéant, pour enregistrer un historique H de transaction du terminal T, cet historique H comprenant des données de transaction associées à des transactions EMV traitées dans le passé par le terminal T. A noter qu'il est possible de mettre en oeuvre l'invention sans qu'un tel historique H de transaction ne soit utilisé.

La première interface de communication INT1 est configurée pour permettre au terminal T de communiquer avec le serveur distant SV2 par l'intermédiaire du serveur distant SV1.

La deuxième interface de communication 18 est configurée pour permettre au terminal T de communiquer avec la carte à puce CD afin notamment de traiter une transaction EMV. Dans cet exemple, la carte 4 est une carte EMV conforme à la norme ISO 7816. Des dispositifs électroniques autres qu'une carte à puce (téléphone mobile exécutant une application bancaire etc.) sont toutefois possibles pour coopérer avec le terminal T.

Dans un exemple particulier, le terminal T comporte en outre au moins un capteur 20 configuré pour détecter une attaque survenant à l'encontre du terminal T. Ce capteur peut être par exemple un capteur optique et/ou électromagnétique. Ce capteur permet par exemple de détecter une attaque de type optique (attaque par laser par exemple) et/ou électromagnétique (pour détecter un brouillage des communications du terminal T par exemple).

Le processeur 10 piloté par le programme d'ordinateur PG1, met ici en oeuvre un certain nombre de modules représentés en **figure 4****,** à savoir : un module de réception M2, un module de détection M4, un module de génération M6 et un module d'envoi M8.

Le module de réception M2 est configuré pour recevoir, lors d'une transaction EMV en cours, une première donnée de transaction (notée par la suite DN1) en provenance de la carte à puce CD avec lequel le terminal T coopère. Divers premières données de transaction au sens de l'invention sont possibles, comme expliqué par la suite.

Le module de détection M4 est configuré pour détecter un événement EVT rencontré par le terminal T lors d'une transaction EMV en cours. Divers types d'évènement au sens de l'invention sont possibles, comme expliqué par la suite.

Dans un exemple particulier, le module de détection M4 est configuré pour détecter un évènement à partir d'au moins une donnée de transaction reçue par le terminal T lors de la transaction EMV en cours. En variante, le module de détection M4 est configuré pour détecter un évènement à partir d'un signal émis par le capteur 20 sur détection d'une attaque ou anomalie rencontrée par le terminal T.

Le module de génération M6 est configuré pour générer un message de transaction (noté par la suite MSG1) comprenant un indicateur MQ indiquant l'inclusion (ou la présence) de la première donnée de transaction reçue par le module de réception M4 dans un champ de donnée dudit message de transaction, et pour insérer, dans ce champ de donnée, une information de sécurité (notée par la suite IS) à la place de la première donnée de transaction, l'information de sécurité étant représentative de l'évènement EVT détecté par le module de détection M4.

Le module d'envoi M8 est configuré pour envoyer, au serveur distant SV1, le message de transaction généré par le module de génération M6 et dans lequel a été insérée l'information de sécurité IS.

La **figure 5** représente schématiquement la structure du serveur SV1 illustré en **figure 2****,** selon un mode de réalisation particulier de l'invention. Ce serveur SV1 est ici configuré pour coopérer selon le protocole EMV avec le terminal T, et pour faire si besoin l'interface entre le terminal T et le serveur SV2 de l'émetteur.

Plus particulièrement, le serveur SV1 comprend ici un processeur 30, une mémoire volatile réinscriptible 32 (de type RAM), une mémoire non volatile réinscriptible 34 (de type Flash par exemple) et une interface de communication INT2.

La mémoire 34 constitue dans cet exemple un support d'enregistrement conforme à un mode de réalisation de l'invention, lisible par le serveur SV1, et sur lequel est enregistré un programme d'ordinateur PG2 conforme à un mode de réalisation de l'invention. Ce programme PG2 comporte des instructions pour l'exécution des étapes d'un procédé de traitement selon un mode de réalisation de l'invention. Des exemples de réalisation de ce procédé sont représentés ci-après en référence aux **figures 7** à **9****.**

La mémoire 34 est ici en outre configuré pour enregistrer une liste LT d'au moins un identifiant de terminal, ainsi que des règles de traitement RL1 et RL2 (notées collectivement RL). A partir de la liste LT et des règles de traitement RL1, RL2, le serveur SV1 est capable de déterminer la manière dont un message de transaction envoyé par la carte à puce CD doit être traité. La nature et la fonction de la liste LT et des règles RL seront décrits plus en détail ultérieurement. Des mises en oeuvre de l'invention sans l'utilisation d'une telle liste LT sont également possibles.

L'interface de communication INT2 permet au serveur SV1 de communiquer avec le terminal T (via l'interface INT1) et, le cas échéant, avec le serveur SV2 de l'émetteur.

Le processeur 30 piloté par le programme d'ordinateur PG2, met ici en oeuvre un certain nombre de modules représentés en **figure 5****,** à savoir : un module de réception M20, un module de détermination M22, un module de détection M24 et un module de traitement M26.

Le module de réception M20 est configuré pour recevoir, en provenance du terminal distant T, un message de transaction (noté par la suite MSG1) comprenant un indicateur MQ indiquant qu'une donnée de transaction conforme à un premier type de donnée est contenue dans un champ de donnée du message.

Le module de détermination M22 est configuré pour déterminer si l'indicateur MQ est valide.

Le module de détection M24 est configuré pour détecter, dans le cas où l'indicateur MQ n'est pas valide, que ladite première donnée est une information de sécurité (IS) non conforme au premier type de donnée, cette information de sécurité étant générée par le terminal T sur détection d'un événement EVT.

Le module de traitement M26 est configuré pour traiter l'information de sécurité (IS) selon au moins règle de traitement RL prédéfinie.

Le principe de fonctionnement des modules M2-M8 du terminal T et des modules M20-M26 du serveur distant SV1 apparaîtra plus précisément dans les exemples de réalisation décrits ci-après en référence aux **figures 7** à **9****.** On comprendra que les modules M2-M26 tels que représentés en **figures 4** et **6** ne constituent que des exemples de mise en oeuvre non limitatifs de l'invention.

Une mise en oeuvre particulière de l'invention est à présent décrite en référence à la **figure 7****.** Plus précisément, le terminal T met en oeuvre un procédé d'envoi en exécutant le programme PG1 et le serveur SV1 met en oeuvre un procédé de traitement exécutant le programme PG2, conformément à un mode de réalisation particulier de l'invention.

On suppose ici qu'une transaction EMV, notée TR2, est en cours de traitement par le terminal T en coopération avec la carte à puce CD.

Comme déjà indiqué, on suppose ici qu'il s'agit d'une transaction de paiement réalisée selon le protocole EMV par le terminal de paiement T avec l'aide de la carte à puce CD. Plus précisément, dans cet exemple particulier, la carte à puce CD et le terminal T ont effectué ensemble la phase préliminaire PHP de la transaction TR2 comme déjà expliqué en référence à la **figure 1****.**

Au cours de la transaction TR2, la carte à puce CD envoie (A2) une donnée de transaction DN1 que le terminal T reçoit au cours d'une étape de réception B2. Cette donnée de transaction DN1 est par exemple une donnée de transaction contenue dans un RECORD lu par le terminal T dans la carte à puce CD, comme déjà expliqué en référence aux étapes E18 et E20 de la **figure 1****.**

La donnée de transaction DN1 peut être de divers type selon le cas. Dans cet exemple, la référence TY1 désigne le type de la donnée de transaction DN1 reçue en B2 par le terminal T. Dans un exemple particulier, la donnée de transaction DN1 est conforme à l'un parmi les types de données de transaction suivants, tels que définis par la norme EMV :
- liste CVM (pour « *Cardholder Vérification Method list* » ou « *CVM list*» en anglais) ;
- contrôle d'usage d'application (ou AUC pour « *Application usage control*» en anglais) ; et
- code d'action de l'émetteur (ou IAC pour « *Issuer Action code* » en anglais).

On suppose dans cet exemple que la donnée de transaction DN1 reçue en B2 est du type « code d'action de l'émetteur » (IAC) conforme à EMV. Autrement dit : TY1 = IAC.

On notera que les serveurs SV1 et SV2 ne doivent pas obligatoirement recevoir une donnée du type IAC pour traiter la transaction TR1 selon le protocole EMV. Autrement dit, la donnée IAC est optionnelle du point de vue des serveurs distants SV1 et SV2 dans la mesure où le standard EMV n'impose pas l'envoi de ce type de donnée de transaction aux serveurs tiers SV1 et SV2. Le serveur bancaire SV2, par exemple, est capable de traiter une transaction de paiement (et mettre en oeuvre le mécanisme de compensation entre compte débiteur et compte créditeur) sans avoir reçu du terminal T une donnée de transaction IAC.

En B4, le terminal T détecte un événement EVT rencontré par le terminal T lors de la transaction TR2 en cours. Dans l'exemple décrit ici, la détection B4 de l'évènement EVT est réalisée par le module de détection M4 illustré en **figure 4****.**

L'évènement EVT détecté en B4 comprend par exemple au moins l'un parmi :
- une anomalie dans la transaction TR2 en cours ;
- une anomalie dans une séquence de transactions comprenant la transaction TR2 en cours et au moins une transaction EMV antérieure traitée par le terminal T ; et
- une attaque à rencontre du terminal.

Plus généralement, l'évènement EVT détecté en B4 peut être un quelconque évènement rencontré par le terminal T et que celui-ci juge digne d'intérêt, ce jugement étant éventuellement réalisé à partir d'au moins une règle définissant au moins une condition prédéfinie à remplir pour qu'un évènement EVT donné soit détecté.

L'évènement EVT ainsi détecté par le terminal T peut correspondre à un ou à une pluralité d'évènements.

La détection de l'évènement EVT peut résulter d'une interaction avec la carte CD lors de la transaction TR2 en cours. Le terminal T détecte par exemple l'évènement EVT à partir d'au moins une donnée de transaction (incluant éventuellement la donnée DN1) reçue de la carte CD au cours de la transaction TR2. Alternativement, l'évènement EVT peut être une attaque physique (de type optique et/ou électromagnétique par exemple) à rencontre du terminal T. Dans ce cas, l'attaque n'est donc pas détectée via l'interface de communication 18 mais grâce au capteur 20 du terminal T, comme déjà expliqué ci-avant.

On notera que la détection de l'évènement EVT peut alternativement survenir avant la réception B2 de la donnée de transaction DN1 provenant de la carte à puce CD.

Par ailleurs, en B6, le terminal T génère un message de transaction MSG1 à envoyer au serveur distant SV1. Ce message de transaction MSG1 comprend un indicateur (ou marqueur) MQ indiquant que la première donnée de transaction DN1 (ou du moins une donnée de transaction du type TY1 = IAC) est incluse dans un champ de donnée FL correspondant du message MSG1. Cet indicateur MQ est par exemple un paramètre (ou tag) contenu dans le message MSG1 pour spécifier la présence d'une donnée de transaction du type TY1 = IAC dans le champ de donnée FL associé.

Dans cet exemple, le message MSG1 peut comprendre divers types de données de transaction nécessaires au serveur SV1 et/ou au serveur SV2 pour traiter la transaction TR2 en cours. Ce message de transaction MSG1 présente par exemple une trame (ou structure) conforme à la norme ISO 8583.

Dans un exemple particulier, le message de transaction MSG1 est une requête d'autorisation en ligne de type ARQC conforme à la norme EMV, comme déjà expliqué ci-avant en référence à l'étape E34 de la **figure 1****.**

Le terminal T obtient en outre une information de sécurité IS représentative de l'évènement EVT détecté en B4. Dans cet exemple, le terminal T sélectionne (ou génère) l'information de sécurité IS en fonction de l'évènement EVT détecté en B4. Pour ce faire, le terminal T applique par exemple une règle prédéfinie spécifiant pour au moins un évènement EVT donné (ou type d'évènement) une information IS à générer.

Au cours d'une étape d'insertion B8, le terminal T insert, dans ledit champ de donnée FL du message de transaction MSG1, l'information de sécurité IS représentative de l'évènement EVT. Bien que l'indicateur MQ dans le message MSG1 indique la présence de la donnée de transaction DN1 du type TY1 = IAC dans le champ FL du message MSG1, c'est en réalité l'information de sécurité IS qui est contenu dans le champ FL à la place de la donnée de transaction DN1. Autrement dit, l'information de sécurité IS est insérée en B8 dans le message de transaction MSG1 en remplacement de la donnée de transaction DN1 reçue en B2.

On suppose dans cet exemple que l'information de sécurité IS est conforme à un deuxième type TY2 de donnée distinct du type TY1 de la donnée de transaction DN1 reçue en B2. Autrement dit, dans l'exemple considéré ici, l'information de sécurité IS n'est pas une donnée de transaction IAC.

Comme expliqué par la suite, l'insertion B8 permet avantageusement de transmettre, depuis le terminal T au serveur SV1, une information de sécurité IS non conforme au type TY1 de la donnée de transaction DN1 et ce, tout en respectant le protocole EMV.

A noter que l'étape de génération B6 et l'étape d'insertion B8 peuvent être exécutées au cours d'une seule et même étape de génération du message de transaction MSG1.

Dans un exemple particulier, sur détection de l'évènement EVT, le terminal T détermine l'information de sécurité IS correspondant à l'évènement EVT, puis enregistre cette information de sécurité IS, par exemple dans la mémoire non volatile 16, en vue de l'insérer ultérieurement dans le message de transaction MSG1 lors de l'étape d'insertion B8.

Le terminal T envoie (B10) ensuite le message de transaction MSG1 au serveur distant SV1, conformément au protocole EMV. Le serveur SV1 reçoit le message MSG1 en C10.

Comme déjà indiqué, l'indicateur MQ inclus dans le message de transaction MSG1 indique la présence, dans le message de transaction MSG1, d'une donnée de transaction (à savoir DN1 dans cet exemple) conforme au type TY1 égal à IAC dans cet exemple. Plus précisément, l'indicateur MQ indique dans cet exemple la présence d'une donnée de transaction IAC dans le champ de donnée FL associé à l'indicateur MQ.

Au cours d'une étape de détermination C12, le serveur SV1 détermine si l'indicateur MQ présent dans le message MSG1 est valide. Cette étape de détermination est par exemple réalisée à partir d'une donnée, distincte de l'indicateur MQ, présente dans le message MSG1 reçu par le serveur SV1 en C10. Dans l'exemple considéré ici, on suppose que le serveur SV1 détermine (C12), à partir d'un identifiant du terminal T inclus dans le message MSG1 reçu en C10, que l'indicateur MQ n'est pas valide.

S'il est déterminé en C12 que le marqueur MQ n'est pas valide, le terminal T en déduit en C14 que la donnée contenue dans le champ de donnée FL du message de transaction MSG1 reçu en C10 n'est pas une donnée de transaction de type TY1 (c.-à-d. IAC dans cet exemple), malgré ce qu'indique le marqueur MQ. Dans cet exemple, s'il est déterminé en C12 que le marqueur MQ n'est pas valide, le serveur SV1 reconnaît que la donnée IS contenue dans le champ de donnée FL est une information de sécurité IS non conforme au type de donnée TY1. Le serveur SV1 traite (C16) alors l'information de sécurité IS de façon appropriée, par exemple selon au moins une règle prédéfinie définissant la manière dont une information de sécurité générée par le terminal T doit être traitée. Ce traitement C16 comprend par exemple la réalisation, à partir de l'information de sécurité IS, d'une analyse de risque ou d'un contrôle de sécurité pour déterminer si le terminal T a rencontré une anomalie, une attaque ou un disfonctionnement lors de la transaction TR2.

Dans l'exemple envisagé ici, le serveur SV1 ne reçoit donc pas de donnée de transaction de type IAC en C10. Toutefois, comme déjà expliqué ci-avant, bien que l'envoi de ce type de donnée soit possible selon le protocole EMV, il n'est pas obligatoire que les serveurs SV1 et SV2 reçoivent une donnée de transaction IAC pour traiter la transaction EMV.

L'invention permet avantageusement de détourner l'usage initialement prévu par le protocole EMV pour une donnée de transaction déterminée afin de transmettre depuis le terminal vers un serveur distant une information de sécurité.

L'invention permet plus particulièrement au terminal T représenté en **figures 2** et **3** de remonter si besoin des informations de sécurité IS au serveur SV1 tout en respectant la norme EMV.

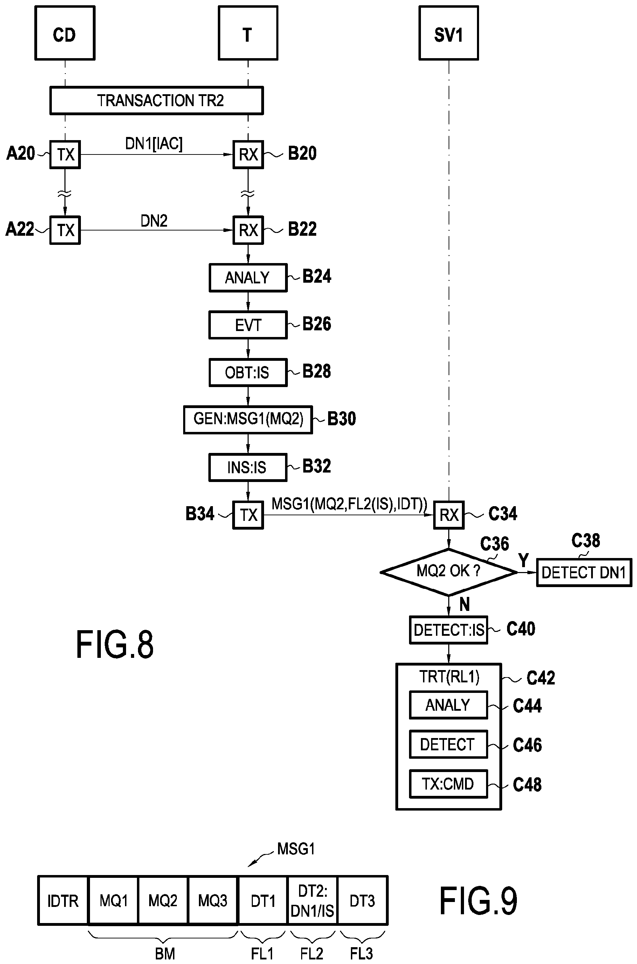

Un mode de réalisation particulier des procédés représentés en **figure 7** est à présent décrit en référence aux **figures 8** et **9****.** Plus précisément, le terminal T met en oeuvre un procédé d'envoi en exécutant le programme PG1 et le serveur SV1 met en oeuvre un procédé de traitement exécutant le programme PG2, conformément à un mode de réalisation particulier de l'invention.

On suppose ici à nouveau que le terminal T coopère avec la carte à puce CD afin de traiter la transaction TR2 en cours. Comme déjà indiqué en référence avec la **figure 7****,** la transaction TR2 est une transaction de paiement réalisée selon le protocole EMV par le terminal de paiement T avec l'aide de la carte à puce CD. On suppose ici que la carte à puce CD et le terminal T ont effectué ensemble la phase préliminaire PHP de la transaction TR2 ainsi que les étapes E12, E14 et E16 comme déjà expliqué en référence à la **figure 1****.**

En A20, la carte CD envoie une première donnée de transaction DN1 (en tant que RECORDS) en réponse à une demande de lecture (non représentée) envoyée au préalable par le terminal T, de la même manière que dans les étapes E18-E20 décrites précédemment en référence à la **figure 1****.** On suppose à nouveau dans cet exemple que la donnée de transaction DN1 est une donnée IAC (« *IssuerAction Code* ») conforme au standard EMV. En variante, la donnée DN1 est une liste CVM (« *CVM list»)* ou une donnée AUC (« *Application Usage Control* »), conformément au standard EMV. Le terminal T reçoit (B20) la donnée de transaction DN1 comme déjà décrit en référence à l'étape B2 représentée en **figure 7****.**

En A22, la carte CD envoie par ailleurs au moins une deuxième donnée de transaction DN2 (également en tant que RECORDS) en réponse à une autre commande de lecture (non représentée) préalablement envoyée par le terminal T. Le terminal T reçoit la donnée de transaction DN2 en B22. En variante, la réception B22 de la deuxième donnée de transaction DN2 se produit avant la réception B20 de la première donnée de transaction DN1.

En B24, le terminal T analyse la ou les données de transaction DN2 reçues en A22 en provenance de la carte à puce CD.

En B26, le terminal détecte un évènement EVT à partir de la ou des données de transaction DN2 analysées en B24. La détection B26 s'effectue par exemple de manière analogue à l'étape B4 représenté en **figure 7****.**

Dans un exemple particulier, lors de l'analyse B24, le terminal T détermine à partir de la ou des données de transaction DN2 et de l'historique H de transaction du terminal T si au moins une règle prédéfinie est satisfaite. Pour ce faire, le terminal T analyse les données de transaction incluses dans l'historique H stocké en local dans la mémoire 16 du terminal T, l'évènement EVT étant détecté en B26 seulement si une règle prédéfinie est satisfaite. De cette manière, il est possible pour le terminal T de détecter des anomalies survenant au cours d'une séquence de transactions EMV traitées par le terminal T, cette séquence incluant la transaction TR2 en cours ainsi qu'au moins une transaction EMV antérieure.

Dans un exemple particulier, les données de transaction DN2 reçues en B22 comprennent un identifiant de la carte à puce CD. En outre, on suppose ici que l'historique H de transaction pris en compte par le terminal T est associé à la carte à puce CD. En d'autres termes, l'historique H stocké en local dans la mémoire 16 comprend des données de transactions relatives à au moins une transaction EMV précédemment traitée par le terminal T en coopération avec la même carte à puce CD. De cette manière, il est possible pour le terminal T de détecter des anomalies survenant au cours d'une séquence de transactions EMV traitées par le terminal T avec la même carte à puce CD. Le terminal T peut par exemple détecter un nombre anormalement élevé de transactions EMV réalisées avec la même carte CD dans un intervalle de temps très court.

Dans un exemple particulier, l'historique H de transaction pris en compte par le terminal T lors de l'analyse B24 comprend la valeur courante d'un compteur (non représenté) enregistrée dans le terminal T. Ce compteur peut représenter divers variables caractérisant une ou une pluralité de transactions. L'analyse B24 comprend une comparaison de la valeur courante du compteur avec une valeur seuil prédéfinie. Selon un exemple particulier, un évènement EVT est détecté en B26 si la valeur courante du compteur enregistré dans le terminal T dépasse la valeur seuil prédéterminée.

Par ailleurs, le terminal T génère en B28 une information de sécurité IS représentative de l'évènement EVT comme déjà expliqué en référence à l'étape B6 représenté en **figure 7****.** L'information de sécurité IS peut être un quelconque paramètre interprétable par le serveur distant SV1 pour indiquer l'occurrence d'une anomalie dans la transaction, un comportement particulier du porteur de la carte à puce CD, un disfonctionnement du terminal T ou de la carte à puce CD etc. Dans un exemple particulier, l'information de sécurité IS comprend la valeur courante d'un compteur comme décrit précédemment en référence aux étapes B24-B26.

Le terminal T génère (B30) ensuite un message de transaction MSG1 et y insère (B32) l'information de sécurité IS comme déjà décrit en référence aux étapes B6 et B8 **(****figure 7****).** Dans cet exemple, le message de transaction MSG1 est une requête d'autorisation en ligne de type ARQC conforme à la norme EMV, comme déjà expliqué ci-avant en référence à l'étape E34 de la **figure 1****.** De façon analogue à la **figure 7****,** la génération B30 et l'insertion B32 peuvent être réalisées au cours d'une même étape de traitement.

La **figure 9** représente schématiquement la trame du message de transaction MSG1 généré par le terminal T en B30-B32, dans l'exemple considéré ici. Plus particulièrement, le message MSG1 comprend un identifiant IDTR de la trame (indiquant ici qu'il s'agit d'une requête d'autorisation ARQC), des indicateurs MQ1 à MQ3, ainsi que des champs de donnée FL1 à FL3 (notés collectivement FL) associés respectivement aux indicateurs MQ1 à MQ3. Chaque indicateur (ou marqueur) MQ1-MQ3 identifie le type de la donnée de transaction respective DT1-DT3 qui est contenue dans le champ de donnée correspondant FL1-FL3. Les marqueurs MQ1-MQ3 sont ici contenus dans un champ BM appelé « BITMAP ». Chaque indicateur MQ1-MQ3 est par exemple codé à l'aide d'un ou plusieurs bits.

Dans cet exemple, la trame du message de transaction MSG1 est conforme à la norme ISO 8583.

Dans cet exemple, on suppose que le champ de donnée FL2 est identifié par l'indicateur MQ2 comme contenant une donnée de transaction DT2 de type IAC. Ce champ FL2 est par exemple adapté pour contenir la donnée de transaction DN1 de type IAC. Cependant, on suppose ici que le terminal T, sur détection de l'évènement EVT, décide d'insérer (B32) l'information de sécurité IS, obtenue en B28, en remplacement (à la place) de la donnée de transaction DN1.

Le message de transaction MSG1 généré par le terminal T comprend en outre dans cet exemple un identifiant IDT du terminal T.

Le terminal T envoie (B24) ensuite le message de transaction MSG1 au serveur SV1 qui le reçoit en C34. Dans cet exemple, le serveur SV1 est configuré pour transmettre le message MSG1, correspondant à une requête d'autorisation en ligne de type ARQC, au serveur distant SV1.

Le serveur SV1 détermine en C36 si l'indicateur MQ2 est valide comme déjà décrit en référence à l'étape C12 représentée en **figure 7****.** Plus particulièrement, dans cet exemple, le serveur SV1 compare sa liste LT, contenant au moins un identifiant de terminal, avec l'identifiant IDT contenu dans le message de transaction MSG1 reçu en C34. A partir du résultat de cette comparaison, le serveur SV1 détermine si l'indicateur MQ2 est valide, autrement dit, si la donnée DT2 contenue dans le champ de donnée FL2 est bien de type IAC comme l'indique l'indicateur MQ2. Dans l'affirmative (MQ2 est valide), le procédé se poursuit en C38. Dans le cas contraire, le procédé se poursuit en C40.

En C38, le serveur SV1 traite la donnée DT2 présente dans le champ de donnée FL2 du message MSG2 en tant que donnée de transaction IAC, conformément à ce qu'indique le marqueur MQ2. Dans ce cas, le serveur SV1 traite la donnée DT2 selon la règle de traitement RL2 stockée dans sa mémoire.

En C40, le serveur SV1 détecte que la donnée DT2 est une information de sécurité IS non conforme au type IAC, comme déjà décrit en référence à l'étape C14 représentée en **figure 7****.** Le serveur SV1 traite (C42) alors l'information de sécurité IS comme déjà expliqué en référence à l'étape C16 représentée en **figure 7****.** Dans cet exemple, le serveur SV1 traite en C42 l'information de sécurité IS selon la règle de traitement RL1 stockée dans sa mémoire, cette règle RL1 étant distincte de la règle RL2.

Dans cet exemple, l'étape de traitement C42 comprend au moins l'un parmi :
- la réalisation, à partir de l'information de sécurité IS, d'une analyse de risque C44 associée à la transaction TR2 en cours ;
- la détection d'une fraude ou d'une anomalie associée à la transaction TR2 en cours, ou associée à la transaction TR2 en cours et à au moins une transaction EMV antérieure ; et
- l'envoi d'une commande prédéfini au terminal T à la carte CD.

A noter que dans les exemples de réalisation décrits ci-avant, le message de transaction MSG1 est envoyé (B10, B34) lors de la transaction EMV en cours. Ce message de transaction correspond par exemple à une requête d'autorisation en ligne de type ARQC conforme à EMV. D'autres types de message de transaction sont toutefois envisageables pour transmettre l'information de sécurité à un serveur distant. En variante, l'information de sécurité est transmise par le terminal après achèvement de la transaction EMV en cours.

L'invention offre un mécanisme souple et efficace pour remonter des informations de sécurité depuis un terminal bancaire vers un serveur bancaire afin de permettre à l'émetteur de la carte à puce (ou à un tiers) de détecter d'éventuelles anomalies de transactions, disfonctionnements ou attaques susceptibles d'être rencontrés par le terminal bancaire. Il est également possible de réaliser des analyses de risque et/ou des études de comportement du porteur de la carte bancaire à partir d'évènements détectés par le terminal bancaire.

L'invention est avantageuse en ce qu'il est possible de mettre en oeuvre la remontée d'information depuis le lecteur vers un serveur distant (de l'émetteur de la carte bancaire par exemple) sans qu'il soit nécessaire de modifier le déroulement général d'un protocole de type EMV par exemple. Par conséquent, la mise en oeuvre de l'invention ne nécessite pas de modification importante des infrastructures bancaires.

Un homme du métier comprendra que les modes de réalisation et variantes décrits ci-avant ne constituent que des exemples non limitatifs de mise en oeuvre de l'invention. En particulier, l'homme du métier pourra envisager une quelconque combinaison des variantes et modes de réalisation décrits ci-avant afin de répondre à un besoin bien particulier.

## Revendications

1. Procédé d'envoi d'une information de sécurité mis en oeuvre par un terminal (T), ledit procédé comprenant les étapes suivantes :
- réception (B2 ; B20), lors d'une transaction en cours (TR2), d'une première donnée de transaction (DN1) en provenance d'une carte à puce (CD) avec lequel ledit terminal coopère ;
- détection (B4; B26) d'un évènement (EVT) rencontré par le terminal (T) lors de la transaction en cours (TR2) ;
- génération (B6; B30) d'un message de transaction (MSG1) comprenant un identifiant (IDT) du terminal (T) et un indicateur (MQ; MQ2) indiquant que la première donnée de transaction (DN1) conforme à un premier type (TY1)de donnée est contenue dans un champ (FL ; FL2) du message de transaction (MSG1) ;
- insertion (B8; B32), dans le champ (FL; FL2) du message de transaction (MSG1), d'une information de sécurité (IS) en remplacement de la première donnée de transaction (DN1), l'information de sécurité étant représentative dudit évènement (EVT) ; et
- envoi (B10; B34), à un serveur distant (SV1), du message de transaction comprenant l'information de sécurité (IS).

2. Procédé selon la revendication 1, l'étape de détection comprenant une analyse (B24) de données de transaction (DN2) reçues, en provenance du dispositif électronique, durant la transaction en cours ;
ledit évènement étant détecté à partir desdites données de transaction analysées.

3. Procédé selon la revendication 2, dans lequel, lors de l'analyse (B24), le terminal (T) détermine à partir des données de transaction (DN2) et d'un historique (H) de transaction du terminal si au moins une règle prédéfinie est satisfaite,
ledit évènement étant détecté si la règle prédéfinie est satisfaite.

4. Procédé selon la revendication 3, dans lequel les données de transaction (DN2) reçues comprennent un identifiant (IDT) du dispositif électronique coopérant avec le serveur distant (SV1),
l'historique (H) de transaction pris en compte lors de l'analyse étant associé audit dispositif électronique.

5. Procédé selon la revendication 3 ou 4, dans lequel l'historique (H) de transaction comprend la valeur courante d'un compteur, ladite analyse comprenant une comparaison de la valeur courante d'un compteur avec une valeur seuil.

6. Procédé selon l'une la revendication 5, dans lequel l'information de sécurité (IS) comprend la valeur courante dudit compteur.

7. Procédé selon l'une quelconque des revendications 1 à 6, dans lequel l'évènement (EVT) détecté par le terminal (T) comprend au moins l'un parmi :
- une anomalie dans la transaction en cours ;
- une anomalie dans une séquence de transactions comprenant la transaction en cours et au moins une transaction antérieure traitée par le terminal ; et
- une attaque à l'encontre du terminal.

8. Procédé selon l'une quelconque des revendications 1 à 7, dans lequel la première donnée de transaction (DN1) est l'une parmi les données de transaction définies par la norme EMV en tant que :
- liste CVM ;
- contrôle d'usage d'application ; et
- code d'action de l'émetteur.

9. Procédé selon l'une quelconque des revendications 1 à 8, comprenant les étapes suivantes :
- détermination (B28), sur détection dudit événement, de l'information de sécurité ; et
- enregistrement (B28), dans une mémoire du terminal, de l'information de sécurité (IS) avant ladite insertion dans le message de transaction.

10. Procédé selon l'une quelconque des revendications 1 à 9, dans lequel, lors de l'étape d'envoi (B10 ; B34), le message de transaction (MSG1) est envoyé pendant la transaction en cours.

11. Procédé selon l'une quelconque des revendications 1 à 10, dans lequel la transaction (TR2) en cours et la première donnée de transaction (DN1) sont conformes au protocole EMV.

12. Procédé de traitement mise en oeuvre par un serveur (SV1), ledit procédé comprenant les étapes suivantes :
- réception (C10 ; C34), en provenance d'un terminal distant (T) qui coopère avec une carte à puce (CD), d'un message de transaction (MSG1) comprenant un identifiant (IDT) du terminal distant (T) et un indicateur (MQ ; MQ2) indiquant qu'une donnée de transaction (DN1) en provenance de la carte à puce et conforme à un premier type (TY1) de donnée est contenue dans un champ (FL ; FL2) du message de transaction (MSG1) ;
- détermination (C12 ; C36) de si l'indicateur (MQ ; MQ2) est valide à partir d'une comparaison d'une liste (LT) enregistrée dans la mémoire du serveur (SV1), contenant au moins un identifiant de terminal, avec l'identifiant (IDT) dudit terminal distant (T) contenu dans le message de transaction (MSG1) ;
- si l'indicateur (MQ; MQ2) n'est pas valide, détection (C14 ; C40) que ladite première donnée de transaction (DN1) est une information de sécurité (IS) non conforme au premier type (TY1)de donnée, ladite information de sécurité (IS) étant générée par le terminal distant (T) sur détection d'un évènement (EVT) rencontré par le terminal (T) lors d'une transaction ; et
- traitement (C16 ; C42) de l'information de sécurité (IS) selon au moins une règle prédéfinie.

13. Programme d'ordinateur (PG1 ; PG2) comportant des instructions pour l'exécution des étapes d'un procédé selon l'une quelconque des revendications 1 à 12 lorsque ledit programme est exécuté par un ordinateur.

14. Terminal (T) comprenant :
- un module de réception (M2) configuré pour recevoir, lors d'une transaction en cours, une première donnée transaction en provenance d'une carte à puce avec lequel ledit terminal coopère ;
- un module de détection (M4) configuré pour détecter un évènement rencontré par le terminal lors de la transaction en cours ;
- un module de génération (M6) configuré pour générer un message de transaction comprenant un identifiant dudit terminal et un indicateur indiquant que la première donnée de transaction conforme à un premier type de donnée est contenue dans un champ du message de transaction, et pour insérer, dans le champ du message de transaction, une information de sécurité en remplacement de la première donnée de transaction, l'information de sécurité étant représentative dudit événement ; et
- un module d'envoi (M8) configuré pour envoyer, à un serveur distant, le message de transaction comprenant l'information de sécurité.

15. Serveur (SV1) comprenant :
- un module de réception (M20) configuré pour recevoir, en provenance d'un terminal distant qui coopère avec une carte à puce, un message de transaction comprenant un identifiant du terminal distant et un indicateur indiquant qu'une donnée de transaction en provenance de la carte à puce et conforme à un premier type de donnée est contenue dans un champ du message de transaction;
- un module de détermination (M22) configuré pour déterminer si l'indicateur est valide à partir d'une comparaison d'une liste enregistrée dans la mémoire du serveur, contenant au moins un identifiant de terminal, avec l'identifiant dudit terminal distant contenu dans le message de transaction ;
- un module de détection (M24) configuré pour détecter, si l'indicateur n'est pas valide, que ladite première donnée est une information de sécurité non conforme au premier type de donnée, ladite information de sécurité étant générée par le terminal sur détection d'un évènement rencontré lors d'une transaction ; et
- un module de traitement (M26) configuré pour traiter l'information de sécurité selon au moins une règle prédéfinie.

## Patentansprüche

1. Verfahren zum Senden einer Sicherheitsinformation, das von einem Endgerät (T) umgesetzt wird, wobei das Verfahren die folgenden Schritte umfasst:
- Empfangen (B2; B20) einer ersten Transaktionsangabe (DN1), die von einer Chipkarte (CD) stammt, mit der das Endgerät zusammenarbeitet, während einer laufenden Transaktion (TR2),
- Detektieren (B4; B26) eines Ereignisses (EVT), auf welches das Endgerät (T) während der laufenden Transaktion (TR2) trifft,
- Generieren (B6; B30) einer Transaktionsnachricht (MSG1), die eine Kennung (IDT) des Endgeräts (T) und einen Indikator (MQ; MQ2) umfasst, der anzeigt, dass die erste Transaktionsangabe (DN1) gemäß einem ersten Angabetyp (TY1) in einem Feld (FL; FL2) der Transaktionsnachricht (MSG1) enthalten ist,
- Einsetzen (B8; B32), in das Feld (FL; FL2) der Transaktionsnachricht (MSG1), einer Sicherheitsinformation (IS) als Ersatz für die erste Transaktionsangabe (DN1), wobei die Sicherheitsinformation für das Ereignis (EVT) repräsentativ ist, und
- Senden (B10; B34) der Transaktionsnachricht, umfassend die Sicherheitsinformation (IS), zu einem entfernten Server (SV1).

2. Verfahren nach Anspruch 1, wobei der Detektionsschritt eine Analyse (B24) von empfangenen Transaktionsangaben (DN2), die von der elektronischen Vorrichtung stammen, während der laufenden Transaktion umfasst,
wobei das Ereignis auf Grundlage der analysierten Transaktionsangaben detektiert wird.

3. Verfahren nach Anspruch 2, wobei, während der Analyse (B24), das Endgerät (T) auf Grundlage der Transaktionsangaben (DN2) und eines Verlaufs (H) der Transaktion des Endgeräts bestimmt, ob mindestens eine vordefinierte Regel erfüllt ist,
wobei das Ereignis detektiert wird, wenn die vordefinierte Regel erfüllt ist.

4. Verfahren nach Anspruch 3, wobei die empfangenen Transaktionsangaben (DN2) eine Kennung (IDT) der elektronischen Vorrichtung umfassen, die mit dem entfernten Server (SV1) zusammenarbeitet,
wobei der Verlauf (H) der Transaktion, der während der Analyse berücksichtigt wird, mit der elektronischen Vorrichtung assoziiert ist.

5. Verfahren nach Anspruch 3 oder 4, wobei der Verlauf (H) der Transaktion den tatsächlichen Wert eines Zählers umfasst, wobei die Analyse einen Vergleich des tatsächlichen Werts eines Zählers mit einem Schwellenwert umfasst.

6. Verfahren nach Anspruch 5, wobei die Sicherheitsinformation (IS) den tatsächlichen Wert des Zählers umfasst.

7. Verfahren nach einem der Ansprüche 1 bis 6, wobei das von dem Endgerät (T) detektierte Ereignis (EVT) mindestens eines umfasst von:
- einer Anomalie bei der laufenden Transaktion,
- einer Anomalie in einer Abfolge von Transaktionen, umfassend die laufende Transaktion und mindestens eine vorherige Transaktion, die von dem Endgerät behandelt wird, und
- einem Angriff auf das Endgerät.

8. Verfahren nach einem der Ansprüche 1 bis 7, wobei die erste Transaktionsangabe (DN1) eine von den Transaktionsangaben ist, die durch die EMV-Norm definiert sind als:
- CVM-Liste,
- Anwendungsnutzungskontrolle und
- Aktionscode des Senders.

9. Verfahren nach einem der Ansprüche 1 bis 8, das die folgenden Schritte umfasst:
- Bestimmung (B28) der Sicherheitsinformation durch die Detektion des Ereignisses und
- Speichern (B28) der Sicherheitsinformation (IS) in einem Speicher des Endgeräts, vor dem Einsetzen in die Transaktionsnachricht.

10. Verfahren nach einem der Ansprüche 1 bis 9, wobei die Transaktionsnachricht (MSG1) während des Sendeschritts (B10; B34) während der laufenden Transaktion gesendet wird.

11. Verfahren nach einem der Ansprüche 1 bis 10, wobei die laufende Transaktion (TR2) und die erste Transaktionsangabe (DN1) dem EMV-Protokoll entsprechen.

12. Behandlungsverfahren, das von einem Server (SV1) umgesetzt wird, wobei das Verfahren die folgenden Schritte umfasst:
- Empfangen (C10; C34) einer ersten Transaktionsnachricht (MSG1), die von einem entfernten Endgerät (T) stammt, das mit einer Chipkarte (CD) zusammenarbeitet, die eine Kennung (IDT) des entfernten Endgeräts (T) und einen Indikator (MQ; MQ2) umfasst, der anzeigt, dass eine Transaktionsangabe (DN1), die von der Chipkarte stammt und einem ersten Angabetyp (TY1) entspricht, in einem Feld (FL; FL2) der Transaktionsnachricht (MSG1) enthalten ist,
- Bestimmen (C12; C36), ob der Indikator (MQ; MQ2) gültig ist, aus einem Vergleich einer Liste (LT), die in dem Speicher des Servers (SV1) gespeichert ist, enthaltend mindestens eine Endgerätekennung, wobei die Kennung (IDT) des entfernten Endgeräts (T) in der Transaktionsnachricht (MSG1) enthalten ist,
- wenn der Indikator (MQ; MQ2) nicht gültig ist, Detektieren (C14; C40), dass die erste Transaktionsangabe (DN1) eine Sicherheitsinformation (IS) ist, die nicht dem ersten Angabetyp (TY1) entspricht, wobei die Sicherheitsinformation (IS) von dem entfernten Endgerät (T) bei der Detektion eines Ereignisses (EVT) generiert wird, auf welches das Endgerät (T) während einer Transaktion trifft, und
- Behandeln (C16; C42) der Sicherheitsinformation (IS) gemäß mindestens einer vordefinierten Regel.

13. Computerprogramm (PG1; PG2), das Anweisungen zur Ausführung der Schritte eines Verfahrens nach einem der Ansprüche 1 bis 12 umfasst, wenn das Programm von einem Computer ausgeführt wird.

14. Endgerät (T), umfassend:
- ein Empfangsmodul (M2), das dazu ausgestaltet ist, während einer laufenden Transaktion eine erste Transaktionsangabe zu empfangen, die von einer Chipkarte stammt, mit der das Endgerät zusammenarbeitet,
- ein Detektionsmodul (M4), das dazu ausgestaltet ist, ein Ereignis zu detektieren, auf welches das Endgerät während der laufenden Transaktion trifft,
- ein Generierungsmodul (M6), das dazu ausgestaltet ist, eine Transaktionsnachricht zu generieren, die eine Kennung des Endgeräts und einen Indikator umfasst, der anzeigt, dass die erste Transaktionsangabe gemäß einem ersten Angabetyp in einem Feld der Transaktionsnachricht enthalten ist, und um in das Feld der Transaktionsnachricht eine Sicherheitsinformation als Ersatz für die erste Transaktionsangabe einzusetzen, wobei die Sicherheitsinformation für das Ereignis repräsentativ ist, und
- ein Sendemodul (M8), das dazu ausgestaltet ist, die Transaktionsnachricht, umfassend die Sicherheitsinformation, zu einem entfernten Server zu senden.

15. Server (SV1), umfassend:
- ein Empfangsmodul (M20), das dazu ausgestaltet ist, eine Transaktionsnachricht zu empfangen, die von einem entfernten Endgerät stammt, das mit einer Chipkarte zusammenarbeitet, die eine Kennung des entfernten Endgeräts und einen Indikator umfasst, der anzeigt, dass eine Transaktionsangabe, die von der Chipkarte stammt und einem ersten Angabetyp entspricht, in einem Feld der Transaktionsnachricht enthalten ist,
- ein Bestimmungsmodul (M22), das dazu ausgestaltet ist, zu bestimmen, ob der Indikator gültig ist, aus einem Vergleich einer Liste, die in dem Speicher des Servers gespeichert ist, enthaltend mindestens eine Endgerätekennung, wobei die Kennung des entfernten Endgeräts in der Transaktionsnachricht enthalten ist,
- ein Detektionsmodul (M24), das, wenn der Indikator nicht gültig ist, ausgestaltet ist, um zu detektieren, dass die erste Angabe eine Sicherheitsinformation ist, die nicht dem ersten Angabetyp entspricht, wobei die Sicherheitsinformation von dem Endgerät bei der Detektion eines Ereignisses generiert wird, das während einer Transaktion anzutreffen ist, und
- ein Behandlungsmodul (M26), das dazu ausgestaltet ist, die Sicherheitsinformation gemäß mindestens einer vordefinierten Regel zu behandeln.

## Claims

1. A method for sending security information implemented by a terminal (T), said method comprising the following steps:
- receiving (B2; B20), during a transaction in progress (TR2), a first transaction datum (DN1) coming from a smartcard (CD) with which said terminal cooperates;
- detecting (B4; B26) an event (EVT) encountered by the terminal (T) during the transaction in progress (TR2);
- generating (B6; B30) a transaction message (MSG1) comprising an identifier (IDT) of the terminal (T) and an indicator (MQ; MQ2) indicating that the first transaction datum (DN1) conforming to a first data type (TY1) is contained in a field (FL; FL2) of the transaction message (MSG1);
- inserting (B8; B32), in the field (FL; FL2) of the transaction message (MSG1), security information (IS) to replace the first transaction datum (DN1), the security information being representative of said event (EVT); and
- sending (B10; B34), to a remote server (SV1), the transaction message comprising the security information (IS).

2. The method according to claim 1, the detection step comprising an analysis (B24) of received transaction data (DN2), coming from the electronic device, during the transaction in progress;
said event being detected from said analyzed transaction data.

3. The method according to claim 2, wherein, during the analysis (B24), the terminal (T) determines, from transaction data (DN2) and a transaction history (H) of the terminal, whether at least one predefined rule is satisfied,
said event being detected if the predefined rule is satisfied.

4. The method according to claim 3, wherein the received transaction data (DN2) comprise an identifier (IDT) of the electronic device cooperating with the remote server (SV1),
the transaction history (H) taken into account during the analysis being associated with said electronic device.

5. The method according to claim 3 or 4, wherein the transaction history comprise the current value of a counter, said analysis comprising a comparison of the current value of a counter with a threshold value.

6. The method according to claim 5, wherein the security information (IS) comprises the current value of said counter.

7. The method according to any one of claims 1 to 6, wherein the event (EVT) detected by the terminal (T) comprises at least one from among:
- an anomaly in the transaction in progress;
- an anomaly in a sequence of transactions comprising the transaction in progress and at least one earlier transaction processed by the terminal; and
- an attack against the terminal.

8. The method according to any one of claims 1 to 7, wherein the first transaction datum (DN1) is one from among the transaction data defined by the EMV standard as:
- CVM list;
- application usage monitoring; and
- action code of the sender.

9. The method according to any one of claims 1 to 8, comprising the following steps:
- determining (B28), upon detection of said event, the security information; and
- recording (B28), in a memory of the terminal, the security information (IS) before said insertion in the transaction message.

10. The method according to any one of claims 1 to 9, wherein, during the sending step (B10; B34), the transaction message (MSG1) is sent during the transaction in progress.

11. The method according to any one of claims 1 to 10, wherein the transaction (TR2) in progress and the first transaction datum (DN1) are according to the EMV protocol.

12. A processing method implemented by a server (SV1), said method comprising the following steps:
- receiving (C10; C34), from a remote terminal (T) that cooperates with a smartcard (CD), a transaction message (MSG1) comprising an identifier (IDT) of the remote terminal (T) and an indicator (MQ; MQ2) indicating that a transaction datum (DN1) coming from the smartcard and conforming to a first datum type (TY1) is contained in a field (FL; FL2) of the transaction message (MSG1);
- determining (C12; C36) whether the indicator (MQ; MQ2) is valid from a comparison of a list (LT) saved in the memory of the server (SV1), containing at least one terminal identifier, with the identifier (IDT) of said remote terminal (T) contained in the transaction message (MSG1);
- if the indicator (MQ; MQ2) is not valid, detecting (C14; C40) that said first transaction datum (DN1) is a security information item (IS) not conforming to the first data type (TY1), said security information item (IS) being generated by the remote terminal (T) upon detection of an event (EVT) encountered by the terminal (T) during a transaction; and
- processing (C16; C42) of the security information item (IS) according to at least one predefined rule.

13. A computer program (PG1; PG2) including instructions for executing steps of a method according to any one of claims 1 to 12 when said program is executed by a computer.

14. A terminal (T) comprising:
- a receiving module (M2) configured to receive, during a transaction in progress, a first transaction datum coming from a smartcard with which said terminal cooperates;
- a detection module (M4) configured to detect an event encountered by the terminal during the transaction in progress;
- a generating module (M6) configured to generate a transaction message comprising an identifier of said terminal and an indicator indicating that the first transaction datum conforming to a first data type is contained in the field of the transaction message, and to insert, in the field of the transaction message, a security information item by replacing the first transaction datum, the security information item being representative of said event; and
- a sending module (M8) configured to send, to a remote server, the transaction message comprising the security information item.

15. A server (SV1) comprising:
- a receiving module (M20) configured to receive, coming from a remote terminal that cooperates with a smartcard, a transaction message comprising an identifier of the remote terminal and an indicator indicating that a transaction datum coming from the smartcard and conforming to a first data type is contained in a field of the transaction message;
- a determining module (M22) configured to determine whether the indicator is valid from a comparison of a list saved in the memory of the server, containing at least one terminal identifier, with the identifier of said remote terminal contained in the transaction message;
- a detection module (M24) configured to detect, if the indicator is not valid, that said first datum is a security information item not conforming to the first data type, said security information being generated by the terminal upon detection of an event encountered during a transaction; and
- fa processing module (M26) configured to process the security information item according to at least one predefined rule.
